# EUROPEAN PATENT APPLICATION

(11) **EP 4 344 765 A1**
(43) Date of publication of application: **03.04.2024**
(21) Application number: 22020463.0
(22) Date of filing: 28.09.2022
(51) Int. Cl.: B01D 53/22, B01D 53/047, B01D 53/32

(54) **METHOD AND APPARATUS FOR PROVIDING A HELIUM PRODUCT**

(71) Applicant: Linde GmbH, 82049 Pullach (DE)
(72) Inventor: Peschel, Andreas, 82049 Pullach (DE); Schiffmann, Patrick, 82049 Pullach (DE); Scherle, Marc, 82049 Pullach (DE); Kim, Yoon Jeoung, 82049 Pullach (DE); Breuer, Georg, 82049 Pullach (DE)
(74) Representative: Lu, Jing

(57) **Abstract**

The invention relates to a method for providing a helium product (106), wherein a feed gas mixture (101) comprising helium, hydrogen and at least one further gas is provided, wherein a membrane separation unit feed (102) is provided using the feed gas mixture (101) or a part thereof, wherein the membrane separation unit feed (102) is passed to a membrane separation unit (20), wherein a permeate (103) is withdrawn from the membrane separation unit (20), wherein a pressure swing adsorption feed (104) is provided using the permeate (103) or a part thereof, wherein the pressure swing adsorption feed (104) is passed to a pressure swing adsorption unit (30), wherein a pressure swing adsorption product gas (105) is withdrawn from the pressure swing adsorption unit (30), wherein the helium product (106) is provided using the pressure swing adsorption product gas (105) or a part thereof, and wherein at least one of the feed gas mixture (101) or the part thereof used in providing the membrane separation feed (102) and the pressure swing adsorption product gas (105) or the part thereof used in providing the helium product (106) is produced to contain hydrogen and is subjected to an electrochemical hydrogen depletion using an electrochemical unit (40). A corresponding apparatus (100, 200, 300) is also part of the present invention.

## Description

The invention relates to a method and apparatus for providing a helium product.

### Background

For the production of high purity helium from gas sources with low helium content, such as less than 1 percent by volume, a combination of membrane separation and pressure swing adsorption (PSA) may be used, as e.g. disclosed in US 2014/0243574 A1. One or multiple membrane stages may be used in such arrangements to initially enrich the helium to a sufficiently high concentration of approximately 20 to 80 percent by volume, a concentration advantageous for final purification by PSA.

In the membrane separation, helium typically cannot be separated from hydrogen, as both are fast permeating components. However, hydrogen can be removed from helium by conversion to water with the addition of oxygen in an oxidation process such as the so-called CatOx (Catalytic Oxidation). This oxidation step comes with the generation of heat from the exothermic reaction. As a rule of thumb, 0.1 mol% hydrogen increases the temperature by 20 K. Usually, with small hydrogen concentrations, the process stream is cooled, and the created water is condensed. If the feed contains large amounts of hydrogen, such as more than 5 mol%, a complex multi-stage reactor-cooler-knock out setup may be required. The energy from this reaction is typically wasted to the cooling water system.

It is an object of the present invention to provide advantageous means for producing pure helium products from gas mixtures of the type mentioned.

### Summary

Against this background, the present invention proposes a method and an apparatus for providing a helium product comprising the features of the independent claims. Embodiments of the present invention are the object of the dependent claims and of the description that follows hereinbelow.

According to embodiments of the present invention, an integration of a solid oxide fuel cell (SOFC) or proton exchange membrane fuel cell (PEMFC) process, a membrane separation, a Catalytic Oxidation (CatOx) and a Pressure Swing Adsorption (PSA) is proposed. Initially, therefore, and before turning to the details of the present invention and preferred embodiments thereof, these techniques will be further explained and some definitions relevant to the present invention will be given.

A SOFC is a high-temperature fuel cell that operates at an operating temperature of typically 600 to 900 °C. The electrolyte of a SOFC comprises a solid ceramic material that is capable of conducting oxygen ions but insulating for electrons. The electrolyte is designed as a thin membrane to be able to transport the oxygen ions with low energy. For transporting the oxygen ions, high temperatures are required. Gas-permeable electrical conductors are attached to the sides of the electrolyte as cathode and anode. The outer side of the cathode facing away from the electrolyte is surrounded by air, the outer anode side is surrounded by fuel gas. Unused air and unused fuel gas as well as combustion products are extracted.

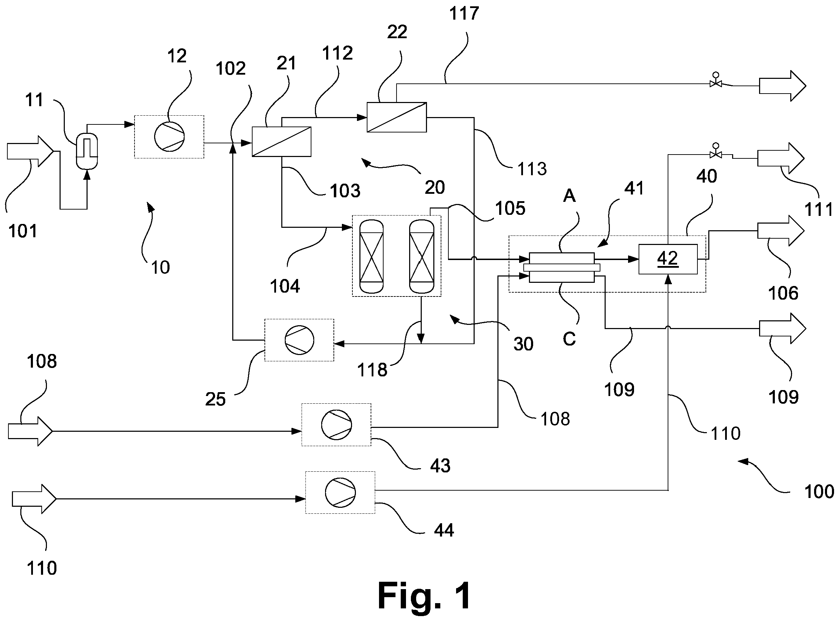

SOFCs are electrochemical devices that enable the conversion of chemical to electrical energy at high efficiency and without any moving parts. These devices can operate on multiple fuel sources, including hydrocarbons, pure hydrogen, and mixtures thereof. SOFCs do not allow for complete fuel utilization in the electrolytic cell, as this would lead to deactivation of the anode-side catalyst. In conventional SOFCs, unconverted fuel is burned in a catalytic converter, providing heat for auxiliary units and heat export, such as further illustrated in Figure 1 below. The exiting flue gas containing nitrogen, oxygen, carbon dioxide and water vapor may be released into the atmosphere.

In membrane separation processes, a membrane, i.e. a partially transmissive element, is used. The membrane constitutes a selective semipermeable barrier between two phases, the feed and the permeate. Components with high permeance can pass the barrier and gather on the permeate side, whereas the other with low permeance remains on the feed side of the membrane, also referred to as retentate. Membranes for gas separation processes can be produced from various materials, such as polymer and ceramic. Its material, structure, and homogeneity characterize the properties of the membrane, which are essentially permeability, selectivity and physical and chemical stability. Membranes used in gas separation processes may be arranged in a closed unit, called module or cartridge. Membrane modules may vary widely in form, packing density, and flow configuration.

The driving force of the membrane is the partial pressure difference of a component between the feed/retentate and the permeate. Since temperature also affects the performance of membranes, operating pressure and temperature are the key factors in membrane operation.

PSA is based on physical adsorption phenomena, wherein highly volatile compounds with low polarity as represented by hydrogen or helium are practically non-adsorbable compared to molecules such as carbon dioxide, carbon monoxide, nitrogen, and hydrocarbons. Hence, most impurities in a hydrogen-containing stream can be selectively adsorbed and a high-purity hydrogen product is obtainable. PSA processes are working between two pressure levels. Adsorption of impurities takes place at a relatively high adsorption pressure while desorption takes place at a relatively low desorption pressure to reduce residual loading of impurities.

Although there is no additional heat for regeneration required in PSA processes, a moderate temperature profile exists in the adsorber vessel because of the exothermic adsorption and endothermic desorption process. Therefore, the product gas leaves the PSA with a slightly elevated temperature at the adsorption pressure while the so-called tail gas including the components desorbed at the desorption pressure leaves the PSA with a lower temperature. The adsorbent material in PSA will generally not be affected by any aging due to thermal effects.

The adsorptive separation process with continuous product supply is made up of a number of pressure vessels filled up with adsorbent material, of interconnecting piping and of respective control valves. During operation, at least one adsorber is on-stream at high pressure and separating the impurities from the process stream while the other adsorbers are regenerated. Therefore, the PSA process appears externally as a continuous process, while internally it is a discontinuous process consisting of a number of sequences operating in parallel. In general, each adsorber performs a specific PSA cycle which is repeated in a cyclical manner.

A proton exchange membrane fuel cell (PEMFC) produces electric energy while proton ions pass the membrane. Hydrogen flows to the anode side of the PEMFC, oxygen on the cathode side. Hydrogen is activated by a catalyst and creates protons and electrons. The electrons return to the cathode, whereas the protons migrate across the membrane. On the cathode side, the oxygen forms water with permeated protons.

The anode reaction in a PEMFC is given by the following equation:

H2 (gas) → 2H⁺ + 2e-

At the cathode, the following reaction is observed:

O₂ (gas) + 2H⁺ + 2e⁻ → H₂O (liquid)

The reactions may be summarized as follows:

H₂ (gas) + 1/2 O₂ (gas) → H₂O (liquid)

An aspect of the present invention includes to utilize a SOFC to reduce the hydrogen content in a gas mixture containing helium while producing power. Such a reduction in hydrogen content may, in embodiments of the present invention, be performed at a number of points which are particularly suited in this connection.

According to the present invention, a method for providing a helium product is provided, wherein a feed gas mixture comprising helium, hydrogen and at least one further gas is provided, wherein a membrane separation unit feed is provided using the feed gas mixture or a part thereof, wherein the membrane separation unit feed is passed to a membrane separation unit, wherein a permeate is withdrawn from the membrane separation unit, wherein a pressure swing adsorption feed is provided using the permeate or a part thereof, wherein the pressure swing adsorption feed is passed to a pressure swing adsorption unit, wherein a pressure swing adsorption product gas is withdrawn from the pressure swing adsorption unit, and wherein the helium product is provided using the pressure swing adsorption product gas or a part thereof.

Generally, if reference is made to a gas, gas mixture, stream, etc., being "used to provide" a gas mixture, stream, etc., this may include any modification such as heating, cooling, compression, expansion, dividing to form substreams, unifying with further streams, depleting, or enriching in one or more components, etc. However, if a first gas mixture, stream, etc., is "used to provide" a second gas mixture, stream, etc., this may also include passing the first gas mixture, stream, etc., to a pipeline or suitable tubing or a container and withdrawing the same therefrom as the second gas mixture, stream, etc., i.e. a provision without further modification.

According to embodiments of the present invention, at least one of the feed gas mixture or the part thereof used in providing the membrane separation feed, the permeate or the part thereof used in providing the pressure swing adsorption feed, and the pressure swing adsorption product gas or the part thereof used in providing the helium product is produced to contain hydrogen and such a gas mixture is subjected to an electrochemical hydrogen depletion using an electrochemical unit. According to the present invention, therefore, and as mentioned before, a required hydrogen depletion is advantageously performed using a process in which, as a synergistic effect, electrical power may be generated which, in turn, can either be sold or used in operating components used in the inventive process.

According to embodiments of the present invention, the electrochemical unit may be operated using one or more fuel cells selected from one or more solid oxide fuel cells, one or more molten carbonate fuel cells and one or more proton exchange membrane fuel cells. Any number and combination of such fuel cells may be used according to embodiments of the present invention in any configuration. Generally, if a component, unit, apparatus, etc. is referred to in the singular herein, this is not intended to exclude several such items being present and, e.g., used in parallel or, in case of adsorption vessels of a PSA unit, cyclically.

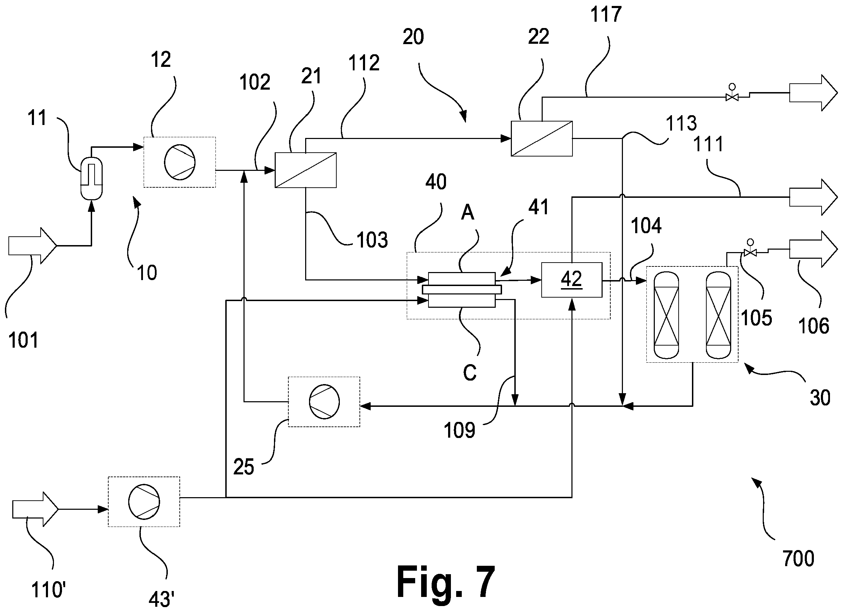

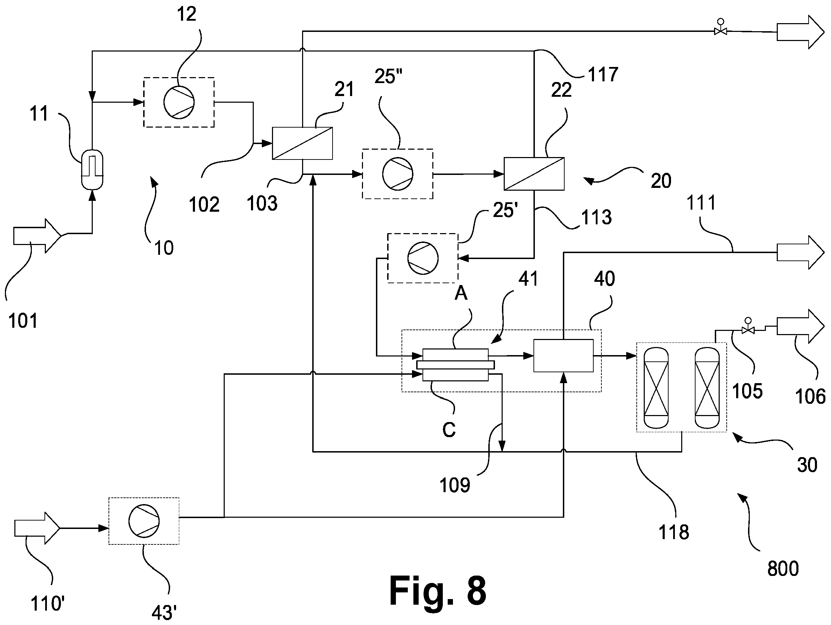

In an embodiment of the present invention, a gas stream withdrawn from a cathode side of the one or more fuel cells is recycled to the membrane separation unit. As particularly explained in connection with Figures 7 and 8 below, helium losses can be reduced in such an embodiment. Alternatively, or additionally, or in a further part, such a gas stream may also be recycled to the cathode feed site.

In embodiments of the present invention, the electrochemical hydrogen depletion is an incomplete hydrogen depletion and the electrochemical hydrogen depletion is followed by a catalytic hydrogen depletion in one or more catalytic reactors arranged downstream of the one or more fuel cells. Trace removal of hydrogen is therefore possible, particularly using oxidative catalytic processes wherein hydrogen is reacted with oxygen as referred to before. However, due to the depletion of hydrogen in the electrochemical unit, such units may be realized in smaller size and with lower costs than in case such an electrochemical unit is not used for depletion.

In a method according to an embodiment of the present invention, the membrane separation unit feed is passed to the membrane separation unit in a first pressure range, and the permeate is withdrawn from the membrane separation unit, the pressure swing adsorption feed is passed to the pressure swing adsorption unit, and the pressure swing adsorption product gas is withdrawn from the pressure swing adsorption unit in a second pressure range below the first pressure range. Particularly when the permeate is withdrawn from the membrane separation unit and the pressure swing adsorption feed is passed to the pressure swing adsorption unit in the same pressure range, an intermediate compression can be omitted. Generally, however, embodiments of the present invention may include compression steps or stages at any position needed or advantageous.

According to embodiments of the present invention, the first pressure range may be a pressure range from 5 to 200 bar, particularly from 10 to 100 bar, absolute pressure and the second pressure range may be a pressure range from 0.5 to 100 bar absolute pressure. That is, the membrane separation unit may be operated at a subatmospheric permeate pressure ("vacuum"). Generally, a difference between the first and second pressure ranges may be selected on the basis of a pressure tolerance of the membrane(s) used, and therefore may be 100 bar or less.

In embodiments of the present invention, the membrane separation unit is operated using a first membrane separation stage and a second membrane separation stage, each producing a permeate and a retentate, wherein the membrane separation unit feed is passed as a feed to the first membrane separation unit, wherein the permeate which, or a part of which, is used in providing the pressure swing adsorption feed is produced in the first membrane separation stage, wherein the retentate produced in the first membrane separation stage or a part thereof is passed as a further feed to the second membrane separation stage, and wherein the permeate produced in the second membrane separation stage or a part thereof is recycled and used in producing the membrane separation unit feed. Such a serial arrangement and recycling the permeate of the second membrane separation unit, may result in a particularly advantageous utilization of resources and increase the helium yield of the method.

The permeate produced in the first membrane separation stage may, in an embodiment of the present invention, be enriched in helium by a factor between 2 and 20 as compared to the membrane separation feed and produced to comprise at least 20 percent by volume of helium and hydrogen, which are particularly suitable values for subsequent PSA. If the second membrane separation stage is connected to the permeate of the first membrane separation stage, the permeate of the second membrane separation stage may be enriched in helium by a factor between 5 and 10 as compared to the feed to the first membrane separation stage.

Generally, according to embodiments of the present invention, a tail gas may be formed in the pressure swing adsorption unit, and this tail gas, or a part thereof, may also be used in forming the membrane separation unit feed. Generally, the permeates in the membrane separation stages are enriched in helium and hydrogen and depleted in the one or more further gases while the retentates are depleted in helium and hydrogen and enriched in the one or more further gases. The product gas of the PSA, being the stream passed over the adsorbent in an adsorption phase, is enriched in helium and hydrogen and depleted in the one or more further gases while the opposite is the case for the tail gas.

According to an embodiment of the present invention, the feed gas mixture has a helium content of less than 5, 4, 3, 2 or 1 percent by volume or a combined content of helium and nitrogen of less than 10 percent by volume. This is a concentration where, as explained at the outset, conventional methods may have disadvantages and where embodiments of the present invention are particularly advantageous.

At least one further gas comprised in the feed gas mixture may be selected from one or more hydrocarbons, one or more noble gases, nitrogen, carbon dioxide, carbon monoxide, oxygen, or combinations thereof, which are slower permeating gases in a membrane separation as compared to hydrogen and helium, and which are likewise stronger adsorbing gases in a PSA as compared to hydrogen and helium.

An apparatus for providing a helium product comprising a membrane separation unit, a pressure swing adsorption unit and an electrochemical unit is also provided. The apparatus is adapted to provide a feed gas mixture comprising helium, hydrogen and at least one further gas, to provide a membrane separation unit feed using the feed gas mixture or a part thereof, to pass the membrane separation unit feed to the membrane separation unit, to withdraw a permeate from the membrane separation unit, to provide a pressure swing adsorption feed using the permeate or a part thereof, to pass the pressure swing adsorption feed to the pressure swing adsorption unit, to withdraw a pressure swing adsorption product gas from the pressure swing adsorption unit, and to provide the helium product using the pressure swing adsorption product gas or a part thereof, as essentially explained above.

The apparatus is configured to provide at least one of the feed gas mixture or the part thereof used in providing the membrane separation feed, the permeate or the part thereof used in providing the pressure swing adsorption feed, and the pressure swing adsorption product gas or the part thereof used in providing the helium product to contain hydrogen and subject the same (or aforementioned) to an electrochemical hydrogen depletion using the electrochemical unit.

As to further features and advantages of a corresponding apparatus, reference is made to the explanations above given for the inventive method and embodiments thereof. These likewise apply to a corresponding apparatus, which may be adapted or configured to perform a method according to any embodiment of the present invention.

The present invention and embodiments thereof will now be described with reference to the appended drawings illustrating aspects of the present invention and its embodiments.

### Short description of the Figures

Figures 1 to 8 show apparatus according to embodiments of the present invention.

### Embodiments of the invention

If reference is made to apparatus features hereinbelow, corresponding explanations also apply to method steps and vice versa.

Figure 1 shows, in the form of a strongly simplified process flow diagram, an apparatus 100 according to an embodiment of the present invention.

In apparatus 100, a feed gas mixture 101 comprising at least helium and hydrogen is provided. The feed gas mixture 101 is filtered and compressed in a pre-treatment unit 10 comprising, in the example illustrated, a filter 11 and a compressor 12. At least a part of the feed gas mixture 101 is used to produce a membrane separation feed 102 which is at least in part passed in a first pressure range as indicated above to a membrane separation unit 20.

A permeate 103 is produced in a second pressure range in the membrane separation unit 20. More precisely, the membrane separation unit 20 comprises a first membrane separation stage 21 and a second membrane separation stage 22 and the permeate 103 is produced as a permeate in the first membrane separation stage 21. Operation of the membrane separation unit 20 is further explained below. At least a part of the permeate 103 is used to produce a pressure swing adsorption feed 104 which is passed, in the second pressure range, to a pressure swing adsorption unit 30 of which, in Figure 1, two adsorption vessels are shown but not specifically indicated. As mentioned, however, the present invention is not limited to a specific number of adsorption vessels.

From the pressure swing adsorption unit 30, a pressure swing adsorption product gas 105 is withdrawn in the second pressure range, and at least a part of this pressure swing adsorption product gas 105 is ultimately used, as further explained below, i.e. after hydrogen depletion, to produce a helium product 106.

In the example illustrated, the pressure swing adsorption product gas 105 is passed at an anode side A through a SOFC 41 of an electrochemical unit 40 where hydrogen is electrochemically reacted with oxygen to form water. The anode stream is passed further on to a catalytic unit 42 where residual hydrogen is reacted with oxygen to form further water. The SOFC 41 is operated with a stream of air 108 which is compressed in an air compression unit 43 and which is depleted in oxygen, forming a stream 109, at a cathode side C of the SOFC 41. The catalytic unit 42 is operated with an oxygen stream 110 compressed in an oxygen compressor 44 and a water stream 111 is withdrawn from the catalytic unit 42.

Again, turning to the operation of the membrane separation unit 22, a retentate 112 of the first membrane separation stage 21 is passed on, in the example shown, to the second membrane separation stage 22 from which a permeate 113 and a retentate 117 may be withdrawn. The former may be recycled together with a tail gas 118 from the pressure swing adsorption unit 30 to the inlet of the membrane separation unit 20, i.e. it may be used in forming the membrane separation unit feed 102. A recycle compressor 25 may be used in this connection.

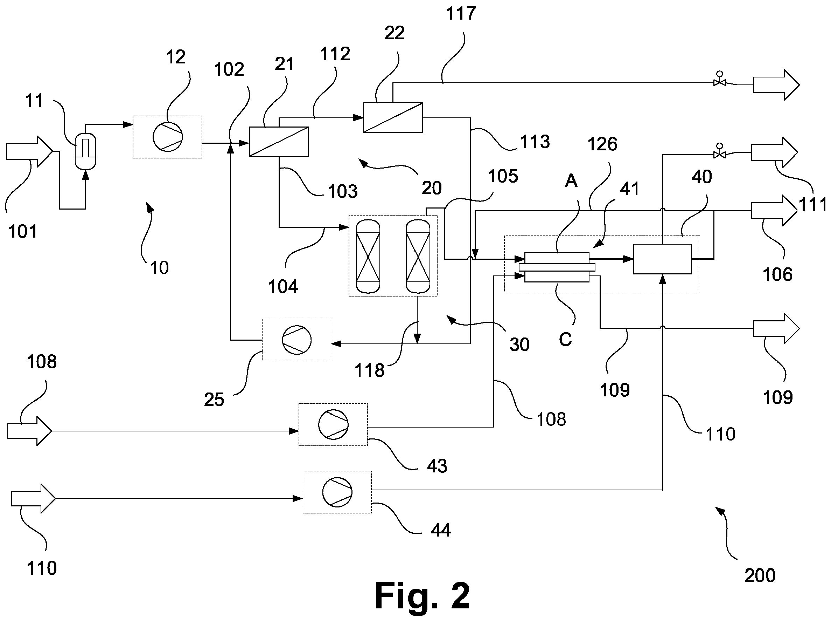

Figure 2 shows, again in the form of a strongly simplified process flow diagram, an apparatus 200 according to an alternative embodiment of the present invention.

The alternative embodiment of the apparatus 200 illustrated in Figure 2 differs from that of apparatus 100 shown in Figure 1 essentially in that a recycle 126 of a part of the helium product to an inlet of the electrochemical unit 40 is present. This embodiment has the advantage of high hydrogen utilization and efficiency

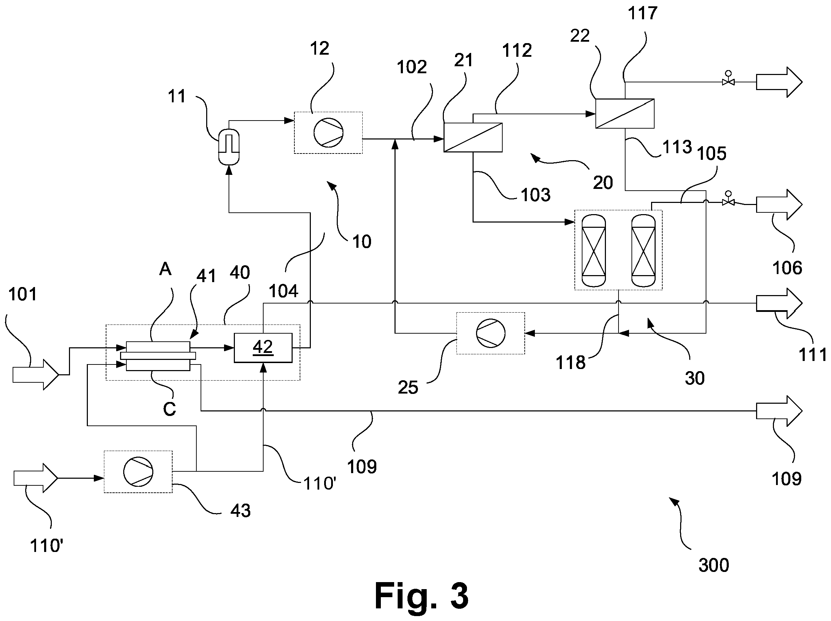

Figure 3 shows, in the form of a strongly simplified process flow diagram, an apparatus 300 according to a further alternative embodiment of the present invention.

The alternative embodiment of the apparatus 300 illustrated in Figure 3 differs from that of apparatus 100 shown in Figure 1 and that of apparatus 200 shown in Figure 2 essentially in the position of the electrochemical unit 40. In apparatus 300 shown in Figure 3, this electrochemical unit 40 is installed upstream of the membrane separation unit 20, i.e. the feed gas mixture 101 is treated therein.

While, therefore, in the embodiments of the apparatus 100 and 200 shown in Figures 1 and 2, the pressure swing adsorption product gas 105 or a part thereof used in providing the helium product 106 is produced to contain hydrogen and is subjected to an electrochemical hydrogen depletion using an electrochemical unit 40, in apparatus 300 shown in Figure 3 at least one of the feed gas mixture 101 or a part thereof used in providing the membrane separation feed 102, is subjected to such depletion.

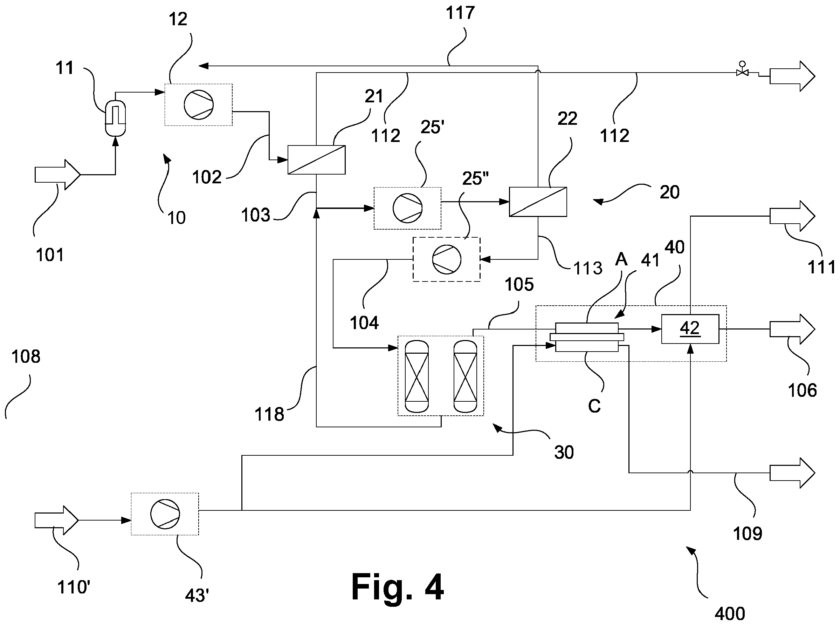

As illustrated in Figure 4, a stream 110' including oxygen, such as air, oxygen enriched air or (essentially) pure oxygen is used instead of streams 108 and 110 as shown in Figures 1 and 2, and this stream 110' is compressed in a compressor 43'.

Figure 4 shows a difference in setup for two membrane separation stages 21, 22 in an apparatus 400 according to a further embodiment of the present invention, which otherwise may essentially resemble apparatus 100 shown in Figure 1. The permeate 103 is produced, as before, in the first membrane separation stage 21 in membrane separation unit 20. Then, the permeate 103 is used as a feed of the second membrane separation stage 22, for which purpose a compressor 25' may be provided. The permeate 103 is produced in the membrane separation stage 21, and unit 20. The retentate 117 of the second membrane separation stage may be compressed and then mixed with the feed and sent to the first membrane stage, as not specifically illustrated for reasons of conciseness. A part of the permeate 113 of the second membrane separation stage 22 is used to produce the pressure swing adsorption feed 104. The retentate 112 of first membrane separation stage may be passed out of apparatus 400.

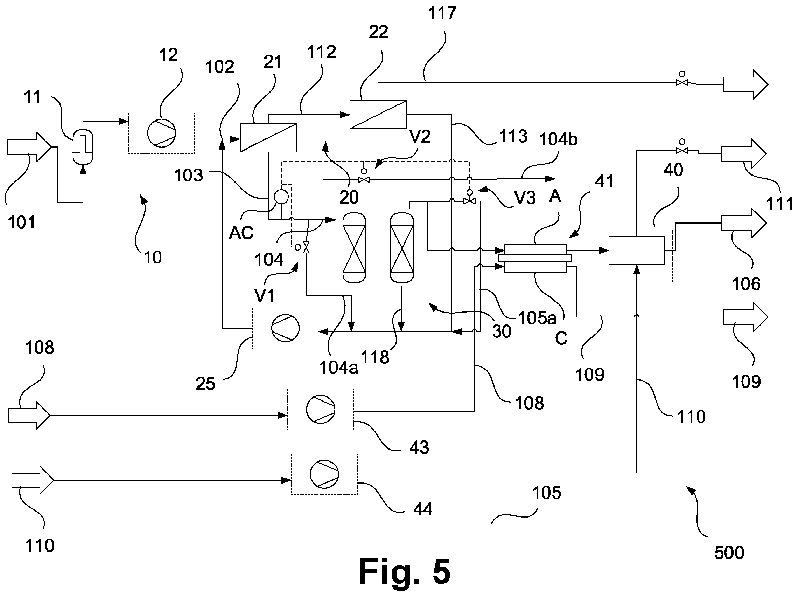

In Figure 5, an apparatus 500 according to a further embodiment of the present invention, which otherwise may essentially resemble apparatus 100 shown in Figure 1, is illustrated. Using an analysis controller AC, the helium concentration in the permeate 103 may continuously be analysed. According to the result of the analysis, one of the three control valves V1, V2, V3 is opened to adjust the helium concentration in the PSA-Feed. These control valves V1, V2, V3 are arranged in additional lines 104a, 104b and 105a. In contrast to what is illustrated in Figure 5, Valve V3 may particularly be placed downstream of SOFC 41.

If the helium concentration is too low (e.g. less than 20 vol%), the pressure swing adsorption unit 30 cannot operate in its optimum range. In this case, the control valves V1, V2, V3 are opened and a part of the PSA product stream 105 may thus be routed upstream of the first membrane separation stage 21 via valve V3 and line 105a, and thus the helium concentration may be increased here. Consequently, the concentration in permeate 103 is increased and the PSA can be operated in its optimum operating range.

If the helium concentration is too high (e.g. more than 80 vol%), the compressors such as recycle compressor 25 might overheat due to a higher isentropic coefficient of the gas. In this case, the control valve V2 may be opened and the part of the permeate 103 may be routed to the depletion or off gas and the helium concentration level in the plant is reduced.

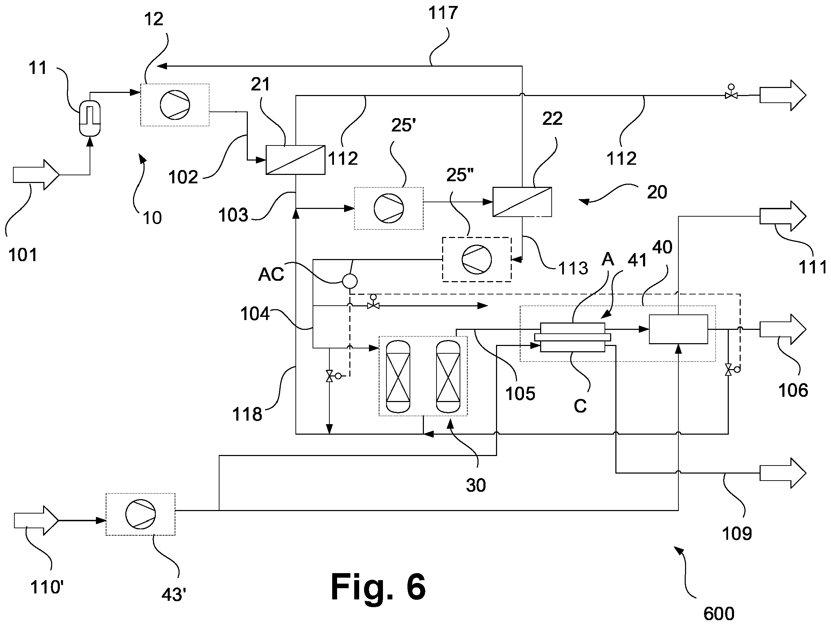

In Figure 6, an apparatus 600 according to a further embodiment of the present invention, which otherwise may essentially resemble apparatus 400 shown in Figure 4, is illustrated. Figure 6 illustrates implementation of an analysis controller as explained in connection with Figure 5 and apparatus 500 in such an embodiment.

Figure 7 shows, in the form of a strongly simplified process flow diagram, an apparatus 700 according to a further alternative embodiment of the present invention.

The alternative embodiment of the apparatus 700 illustrated in Figure 7 differs from that of the apparatus shown in the previous Figures essentially in the position of the electrochemical unit 40. In apparatus 700 shown in Figure 7, this electrochemical unit 40 is installed to treat the first permeate 103.

Figure 8 shows, in the form of a strongly simplified process flow diagram, an apparatus 800 according to a further alternative embodiment of the present invention.

In the alternative embodiment of the apparatus 800 illustrated in Figure 8, similarly to the apparatus 700 shown in Figure 7 the electrochemical unit 40 is installed at a position to treat the first permeate 103. In the case of PEMFC, Helium loss can be prevented by recycling the cathode stream to the membrane feed, as illustrated with streams 109 in Figures 7 and 8 for apparatus 700 and 900. The pressure swing adsorption feed gas or the first retentate 103 is passed at an anode side A through a PEM where hydrogen is separated and permeated to the cathode side C. Helium, which is migrated with hydrogen, can be recycled with water and excess Air or oxygen. A large part of the helium and unreacted hydrogen remains on the anode side, which is converted in catalytic unit 42.

Alternatively, the cathode outlet stream can be recycled to the cathode inlet stream. In case air is used on the cathode side, a purge can be sent to the membrane feed. To reduce this purge, also oxygen can be used as feed to the cathode. In this case, significant higher recycle rates can be achieved and a lower purge (only for minor inert traces) to the membrane or atmosphere is needed. In this manner, helium, which might migrate with the hydrogen to the cathode site, is not lost.

Alternatively, the cathode outlet stream (or the purge from the cathode outlet stream in case some part of the cathode outlet stream is recycled to the inlet) can be sent to the catalytic unit 42 to provide the required amount of oxygen. In this case, helium, which might migrate with hydrogen to the cathode site, is also recovered.

A yet further embodiment, which is not specifically illustrated and which may be a modification of the embodiment shown in Figure 3, may include that the SOFC is arranged before or upstream the Membrane separation or its first step, and the second membrane separation step is connected to the permeate of first Membrane.

## Claims

1. A method for providing a helium product (106), wherein a feed gas mixture (101) comprising helium, hydrogen and at least one further gas is provided, wherein a membrane separation unit feed (102) is provided using the feed gas mixture (101) or a part thereof, wherein the membrane separation unit feed (102) is passed to a membrane separation unit (20), wherein a permeate (103) is withdrawn from the membrane separation unit (20), wherein a pressure swing adsorption feed (104) is provided using the permeate (103) or a part thereof, wherein the pressure swing adsorption feed (104) is passed to a pressure swing adsorption unit (30), wherein a pressure swing adsorption product gas (105) is withdrawn from the pressure swing adsorption unit (30), wherein the helium product (106) is provided using the pressure swing adsorption product gas (105) or a part thereof, and wherein at least one of the feed gas mixture (101) or the part thereof used in providing the membrane separation feed (102), the permeate (103) or the part thereof used in providing the pressure swing adsorption feed (104) and the pressure swing adsorption product gas (105) or the part thereof used in providing the helium product (106) is produced to contain hydrogen and is subjected at least in part to an electrochemical hydrogen depletion using an electrochemical unit (40).

2. The method according to claim 1, wherein the electrochemical unit (40) is operated using one or more fuel cells (41) selected from one or more solid oxide, molten carbonate and proton exchange membrane fuel cells.

3. The method according to claim 2, wherein a gas stream withdrawn from a cathode side (C) one or more fuel cells is recycled to the membrane separation unit (20) and/or the cathode feed site.

4. The method according to claim 2 or 3, wherein the electrochemical hydrogen depletion is an incomplete hydrogen depletion and wherein the electrochemical hydrogen depletion is followed by a catalytic hydrogen depletion in one or more catalytic reactors (42) arranged downstream of the one or more fuel cells (41).

5. The method according to any one of the preceding claims, wherein the membrane separation unit feed (102) is passed to the membrane separation unit (20) in a first pressure range, and wherein the permeate (103) is withdrawn from the membrane separation unit (20), the pressure swing adsorption feed (104) is passed to the pressure swing adsorption unit (30), and the pressure swing adsorption product gas (105) is withdrawn from the pressure swing adsorption unit (30) in a second pressure range below the first pressure range.

6. The method according to claim 5, wherein the first pressure range is a pressure range from 5 to 200 bar absolute pressure and wherein the second pressure range is a pressure range from 1 to 100 bar absolute pressure.

7. The method according to any of the preceding claims, wherein the membrane separation unit (10) is operated using a first membrane separation stage (21) and a second membrane separation stage (22) each producing a permeate (103, 113) and a retentate (112, 117), wherein the membrane separation unit feed (102) is passed as a feed to the first membrane separation unit (21), wherein the permeate (103) which, or a part of which, is used in providing the pressure swing adsorption feed (104) is produced in the first membrane separation stage (21), wherein the retentate (112) produced in the first membrane separation stage (21) or a part thereof is passed as a further feed to the second membrane separation stage (22), and wherein the permeate (113) produced in the second membrane separation stage (22) or a part thereof is recycled and used in producing the membrane separation unit feed (102).

8. The method according to claim 6, wherein the permeate (103) produced in the first membrane separation stage (21) is enriched in helium by a factor between 2 and 20 as compared to the membrane separation feed (102) and produced to comprise at least 20 percent by volume of helium and hydrogen and/or wherein the permeate (113) produced in the second membrane separation stage is enriched in helium by a factor between 5 and 10 as compared to the feed to the second membrane separation stage (22).

9. The method according to any one of the preceding claims, wherein the feed gas mixture (101) has a helium content of less than 5 percent by volume or a combined content of helium and nitrogen of less than 10 percent by volume.

10. The method according to any one of the preceding claims, wherein the at least one further gas comprised in the feed gas mixture (101) is selected from one or more hydrocarbons, one or more noble gases, nitrogen, carbon dioxide, carbon monoxide, oxygen, or combinations thereof.

11. A plant (100, 200, 300) for providing a helium product (106) comprising a membrane separation unit (20), a pressure swing adsorption unit (30) and an electrochemical unit (40) and being adapted to provide a feed gas mixture (101) comprising helium, hydrogen and at least one further gas, to provide a membrane separation unit feed (102) using the feed gas mixture (101) or a part thereof, to pass the membrane separation unit feed (102) to the membrane separation unit (20), to withdraw a permeate (103) from the membrane separation unit (20), to provide a pressure swing adsorption feed (104) using the permeate (103) or a part thereof, to pass the pressure swing adsorption feed (104) to the pressure swing adsorption unit (30), to withdraw a pressure swing adsorption product gas (105) from the pressure swing adsorption unit (30), to provide the helium product (106) using the pressure swing adsorption product gas (105) or a part thereof, and to produce at least one of the feed gas mixture (101) or the part thereof used in providing the membrane separation feed (102) and the pressure swing adsorption product gas (105) or the part thereof used in providing the helium product (106) to contain hydrogen and to subject the same or a part thereof to an electrochemical hydrogen depletion using the electrochemical unit (40).

12. The plant (100, 200, 300) according to claim 11, further adapted to perform a method according to any one of claims 1 to 10.
